# EUROPEAN PATENT SPECIFICATION

(11) **EP 2 759 716 B1**
(45) Date of publication and mention of the grant of the patent: **23.08.2017**
(21) Application number: 14152710.1
(22) Date of filing: 27.01.2014
(51) Int. Cl.: F16B 12/20

(54) **Dovetail connection for releasably connecting two construction elements**
Schwalbenschwanzverbindung zur lösbaren Verbindung von zwei Bauteilen
Joint en queue d'aronde pour réunir deux éléments amovibles de construction

(30) Priority: 25.01.2013 NL 1040022
(43) Date of publication of application: 30.07.2014
(73) Proprietor: Verbossen, Adrianus Franciscus Maria, 5403 LJ Uden (NL)
(72) Inventor: Verbossen, Adrianus Franciscus Maria, 5403 LJ Uden (NL)
(74) Representative: Louwaard, Jan-Willem Paul

(56) References cited:
- WO-A1-2011/110977
- FR-A- 858 534
- US-A- 3 589 758

## Description

The invention relates to a dovetail connection for releasably connecting two construction elements, particularly without mutually connecting the construction elements by means of for instance bolts.

Dovetail connections for releasably connecting two construction elements are known, for instance from French patent publication FR 858 534.

The dovetail connection according to the invention comprises a female part and a male part which are each mountable on one of the construction elements and which are both provided with dovetail profiles which can mutually engage with a sliding movement for the purpose of forming the dovetail connection and which taper in the sliding direction. The dovetail connection according to the invention is further provided with locking means for locking the connection against movement in the sliding direction in the mutually engaged position.

Such a dovetail connection is known from the European patent specification EP 1 718 812 B1. In this known dovetail connection the locking means consist of a leaf spring which is mounted on the female part and which, during sliding of the dovetail profiles into each other, is pressed in by the male part and, in the fully mutually engaged position of the dovetail connection, is released from the male part and springs back, wherein the outer end of the leaf spring comes up against the outer end of the male part so as to secure the male part against unlocking. For unlocking purposes the leaf spring can be pressed in with an aid in order to release the male part.

A drawback of this known dovetail connection is that during locking the leaf spring only prevents the dovetail connection sliding apart but does not prevent a further mutual engagement of the dovetail connection, which may result in undesired jamming of the dovetail connection whereby the connection is difficult to break. A further drawback of this known locking with a leaf spring is that it may impede sliding of the male part into the female part.

The invention has for its object to provide a dovetail connection for releasably connecting two construction elements which does not have these drawbacks.

This objective is achieved according to the invention in that the locking means are formed by at least one pin at one of the dovetail parts for coupling and at least one hole in the other dovetail part for coupling, this pin being movable in a formed dovetail connection in a direction perpendicularly of the sliding plane and in the direction of a hole so as to fall into this hole for the purpose of locking the dovetail connection, and being movable in opposite direction so as to move out of this hole again for the purpose of unlocking the dovetail connection. The at least one pin is movable in a direction perpendicularly of the sliding plane along which the dovetail parts, after being brought into contact with each other, are moved relative to each other in order to allow mutual engagement of the dovetail profiles, and along which the dovetail parts are moved relative to each other from coupled position in order to take the dovetail profiles apart.

Achieved relative to the prior art by means of the present invention is that with a single locking element the dovetail parts are locked in the coupled position against the dovetail parts sliding apart as well as against the dovetail parts sliding further into each other.

It is noted that a dovetail connection is known from the American patent specification 2 793 407 with a recess in one of the dovetail parts and a protuberance in the other dovetail part, wherein through elastic deformation the protuberance falls into the recess when the dovetail parts slide into each other. Because of the elastic deformation required, this connection requires a relatively great force during locking and unlocking and is thereby very vulnerable.

In a favourable embodiment of the dovetail connection according to the invention the male part comprises a flat block provided on a flat side with a protruding ridge in the form of a dovetail and the female part comprises a flat block provided on a flat side with a recess in the form of a dovetail. In order to connect the male part and the female part the respective flat sides are placed against each other and the protruding ridge of the male part is inserted into the recess of the female part in the sliding direction. The two flat sides slide along each other here and thus form the sliding plane of the dovetail connection. In a formed dovetail connection the pin is thus movable in a direction perpendicularly of the flat sides.

In a favourable embodiment of the dovetail connection according to the invention the pin and the hole are located outside the dovetail profiles of the male part and the female part. This has the advantage that the diameter of the pin is not limited by the space available inside the dovetail profiles.

In a further attractive embodiment of a dovetail connection according to the invention the pin is mounted in a hole in the female part of the dovetail connection for movement between a first position, in which the pin lies wholly in the hole in the female part, and a second position in which the pin falls fittingly into the hole formed in the male part. Since the dovetail profile of the male part can be inserted into the dovetail profile of the female part, the portion of the female part outside the dovetail profile has to be thicker than the portion of the male part outside the dovetail profile. More space is then available in the female part in the direction of movement of the pin for mounting of the pin in the female part.

In a favourable embodiment hereof a spring is present which presses the pin in the direction of the second position and the pin is placeable in the first position counter to the action of the spring.

In an attractive embodiment of a dovetail connection according to the invention the tapering dovetail profiles on both the female part and the male part are lengthened on their narrower side with a non-tapering dovetail profile.

This achieves that the male part and the female part can no longer move apart during sliding together of the dovetail connection when the non-tapering profiles come into contact with each other. In a preferred embodiment thereof the pin-hole connection is situated in the portion of the female part and the male part provided with the non-tapering dovetail profile. In the portion of the female part and the male part provided with the non-tapering dovetail profile more space is available for positioning the pin-hole connection outside the dovetail profiles. This has the advantage that the dovetail connection can be of small size.

The male part is preferably provided on an outer end in which the non-tapering dovetail profile is situated with an oblique lead track in which the pin is movable during sliding together of the male part and the female part of the dovetail connection, and the pin is provided at the outer end with which it falls into the male part during sliding together of the male part and the female part with a chamfered part which can co-act with the oblique lead track in the male part. This achieves that the pin falls automatically into the hole of the male part during sliding together of the dovetail parts.

Other features and advantages of the invention will become apparent from the following description of an embodiment according to the invention.

The invention will be elucidated hereinbelow with reference to accompanying drawings, in which:
Fig. 1 shows a view of a male part of a dovetail connection according to the invention,
Fig. 2 shows a view along line A-A in fig. 1,
Fig. 3 shows a cross-section along line B-B in fig. 1,
Fig. 4 shows a view of a female part of a dovetail connection according to the invention,
Fig. 5 shows a view along line C-C in fig. 4,
Fig. 6 shows a cross-section along line D-D in fig. 4,
Fig. 7 shows a pin for locking the dovetail connection shown in fig. 1-6, and
Fig. 8 shows the pin of fig. 7 in the mutually engaged position of the dovetail connection.

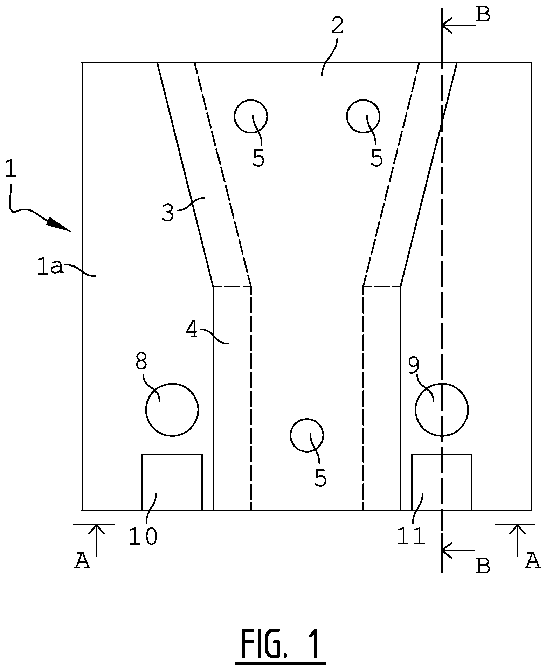

The male part 1 of the dovetail connection shown in figures 1-3 consists of a flat metal block with dimensions of for instance 120 x 120 mm. This block 1 is provided on a flat side 1a with a protruding ridge 2 in the form of a dovetail. Dovetail 2 tapers over half 3 of its length from a width of for instance 90 mm to a width of for instance 50 mm. Dovetail 2 thus forms over half 3 of its length a tapering dovetail profile of male part 1. Over the other half 4 of its length the dovetail has a constant width of 50 mm. Dovetail 2 thus forms over this other half 4 of its length a non-tapering dovetail profile of male part 1. The height of dovetail 2 amounts to about 15 mm and the enclosed angle α to about 60°.

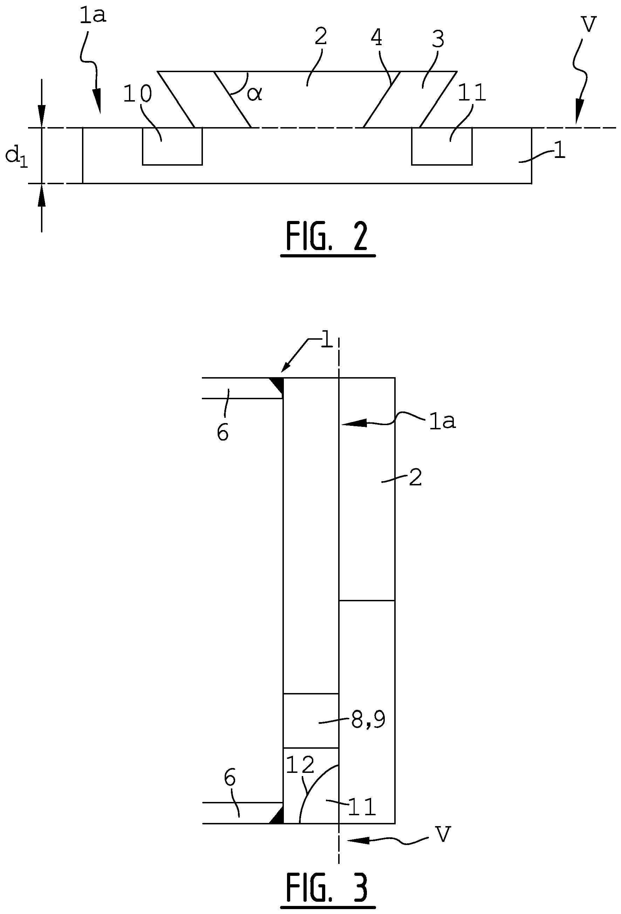

Reference numerals 5 designate the locations where block 1 can be attached to a construction element for connecting using for instance socket screws. Block 1 can for instance be attached with socket screws to an end plate welded onto an end surface of for instance an I-profile. Alternatively, it is possible to attach block 1 by means of welding to a construction element for connecting. Figure 3 shows that a block 1 is welded by means of welds 1 to an end surface of an I-profile 6.

About halfway along the part 4 of dovetail 2 that has a constant width continuous holes 8 and 9 are formed on either side of part 4 in block 1, these holes having a function in the locking of the formed dovetail connections, as will be elucidated below.

As seen in the longitudinal direction of dovetail 2 recesses 10 and 11 are arranged in block 1 in an edge of block 1 under holes 8 and 9, which recesses form oblique lead tracks 12 as shown in fig. 3 and the action of which will likewise be elucidated below.

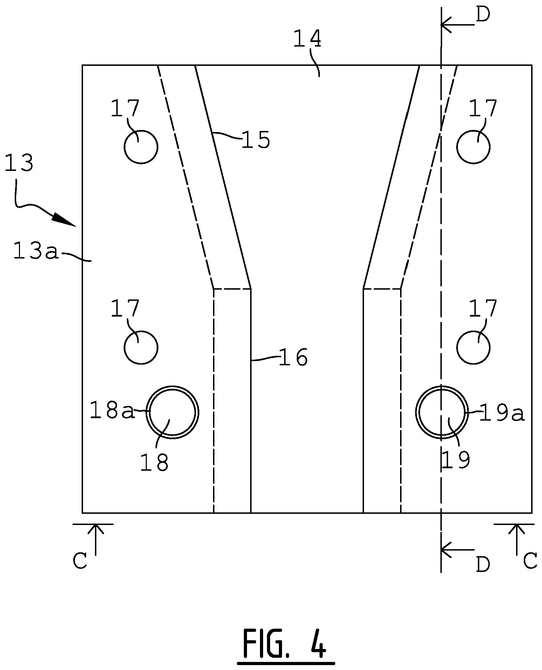

The female part 13 of the dovetail connection shown in figures 4-6 also consists of a flat metal block with dimensions of for instance 120 x 120 mm. On a flat side 13a this block 13 is provided with a recess 14 in the form of a dovetail. Dovetail 14 tapers over half 15 of its length from a width of for instance 90 mm to a width of for instance 50 mm. Dovetail 14 thus forms over half 15 of its length a tapering dovetail profile of female part 13. Over the other half 16 of its length the dovetail has a constant width of 50 mm. Over this other half 16 of its length dovetail 14 thus forms a non-tapering dovetail profile of female part 13. The depth of dovetail 14 amounts to about 15 mm and the enclosed angle α to about 60°. The depth of the dovetail likewise amounts to about 15 mm

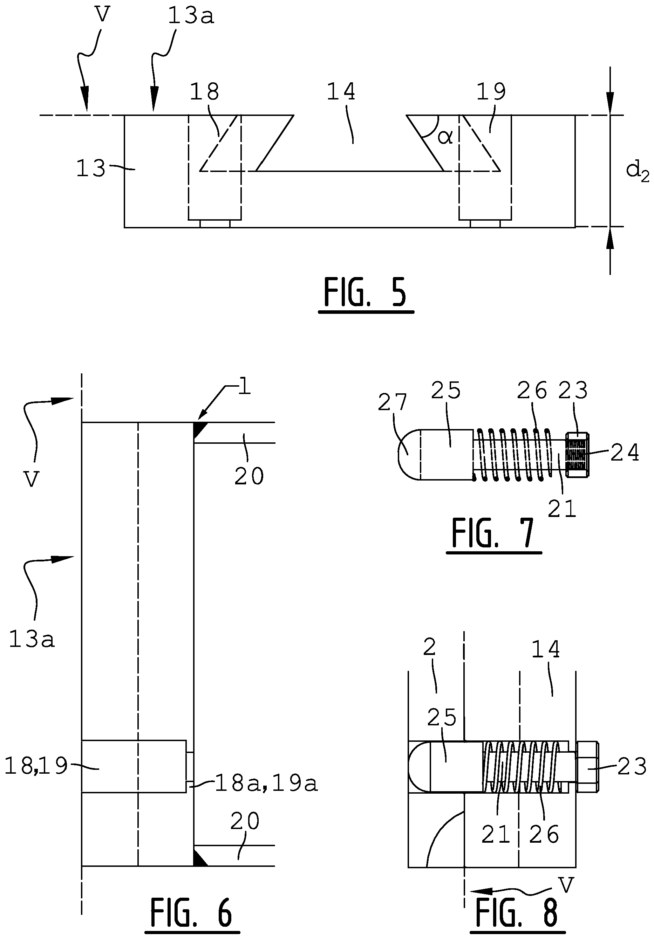

Reference numerals 17 designate the locations where block 13 can be attached to a construction element for connecting using for instance socket screws. Block 13 can for instance be attached with socket screws to an end plate welded onto an end surface of for instance an I-profile. Alternatively, it is possible to attach block 13 by means of welding to a construction element for connecting. Fig. 6 shows that a block 13 is welded by means of welds 1 to an end surface of an I-profile 20.

About halfway along the part 16 of dovetail 14 that has a constant width continuous holes 18 and 19 are formed on either side of part 16 in block 1, these holes having a function in the locking of the formed dovetail connection, as will be elucidated below. The round holes 18 and 19 have a diameter of 14 mm along the greater part of their length, but have a smaller diameter of for instance 8 mm at the outer end on the side remote from dovetail 14. This creates respective edges 18a and 19a which form a stop for a spring, as will be elucidated hereinbelow.

Comparison of figures 2 and 5 teaches that the thickness d₁ of the portion of the male part outside dovetail profile 2, in which holes 10 and 11 are present in which pins 25 can be moved, is smaller than the thickness d₂ of the portion of the female part outside dovetail profile 14, in which pins 25 are mounted in holes 18 and 19.

Fig. 7 shows a shaft 21 formed by a cylindrical part 22 with a diameter of for instance 8 mm and a head 23 with a diameter of for instance 10 mm. Shaft 21 can be inserted through respective holes 18 and 19, wherein head 23 comes up against stop 20. Shaft 21 is provided on its other outer end with screw thread 24. A pin 25, which functions as locking member for a dovetail connection, has a hole with internal screw thread with which pin 25 can be screwed onto shaft 21. Before this takes place a spring 26 is placed round shaft 21. Pin 25 has a cylindrical cross-section in order to fit into respective holes 18 and 19. The free outer end of pin 25 that lies outside dovetail 14 of female part 13 has a chamfered part 27 corresponding to the chamfered lead tracks 12 of recesses 10 and 11 of the male part.

The operation of the dovetail connection for releasable connection of two construction elements is as follows:

A male part 2 of the dovetail connection and a female part 14 of the dovetail connection are attached using welds to respectively two releasably connectable construction elements in the form of I-profiles 6 and 20.

In order to connect the two construction elements to each other the male part 2 attached to one of the construction elements is moved to the female part 14 attached to the other construction element. The widely spreading parts 3 and 15 of respectively male part 2 and the female part are directed upward here. By then placing the lower, straight part 4 of male part 2 inside the tapering part 15 of female part 14 and sliding male part 2 downward in sliding direction, the straight part 4 of male part 2 enters the straight part 16 of female part 14. The flat sides 1a and 13a then lie against each other and form the sliding plane V along which male part 2 and female part 14 slide. Male part 2 can now no longer move away from the female part. When male part 2 is moved further downward along the sliding plane V, the lead tracks 10 and 11 come up against the oblique side 27 of pins 27 at the lower edge of the male part and press these aside counter to the action of springs 26 until pins 27 have been pressed wholly into female part 14. When during downward movement of male part 2 the pins 27 have reached the position of holes 8 and 9, springs 26 press pins 27 into these holes and the dovetail connection is locked. In this locked position the tapering parts 3 and 15 of respectively male part 2 and the female part are in contact with each other.

For the purpose of unlocking the dovetail connection the pins 27 are pulled out of holes 8 and 9 by pulling out the heads 23 and sliding a spacing piece between head 23 and female part 13. Female part 13 can now be displaced upward in sliding direction along sliding plane V, wherein dovetails 2 and 14 detach from each other and female part 13 can be removed from male part 1.

## Claims

1. Dovetail connection for releasably connecting two construction elements (20,6), comprising a female part (13) and a male part (1) which are each mountable on one of the construction elements (18,6) and which are both provided with dovetail profiles (14,15/2,3) which can mutually engage with a sliding movement for the purpose of forming the dovetail connection and which taper in the sliding direction, which dovetail connection is provided with locking means (18,19/8,9) for locking the connection against movement in the sliding direction in the mutually engaged position, **characterized in that** the locking means (18,19/8,9) are formed by at least one pin (25) at one of the dovetail parts (13) for coupling and at least one hole (8) in the other dovetail part (1) for coupling, this pin (25) being movable in a formed dovetail connection in a direction perpendicularly of the sliding plane and in the direction of one of the holes (8) so as to fall into this hole (8) for the purpose of locking the dovetail connection, and being movable in opposite direction so as to move out of this hole (8) again for the purpose of unlocking the dovetail connection.

2. Dovetail connection as claimed in claim 1 **characterized in that** the male part comprises a flat block provided on a flat side with a protruding ridge in the form of a dovetail and the female part comprises a flat block provided on a flat side with a recess in the form of a dovetail.

3. Dovetail connection as claimed in claim 1 or 2, **characterized in that** the pin and the hole are located outside the dovetail profiles of the male part and the female part.

4. Dovetail connection as claimed in claim 1, 2 or 3, **characterized in that** the pin (25) is mounted movably in a hole (18) in the female part (13) of the dovetail connection and that in the mutually disengaged position of the connection the pin (25) is situated in a first position, in which the pin lies wholly in the hole (18) in the female part (13), and in the mutually engaged position of the connection is situated in a second position in which the pin (25) falls fittingly into the hole (8) formed in the male part (1).

5. Dovetail connection as claimed in claim 4, **characterized in that** a spring (26) is present which presses the pin (25) in the direction of the second position and that the pin (25) is placeable in the first position counter to the action of the spring (26).

6. Dovetail connection as claimed in any of the foregoing claims, **characterized in that** the tapering dovetail profiles (15;3) on both the female part (13) and the male part (1) are lengthened on their narrower side with a non-tapering dovetail profile (16;4).

7. Dovetail connection as claimed in claim 6, wherein the pin (25)-hole (8) connection is situated in the portion of the female part (13) and the male part (1) provided with the non-tapering dovetail profile (16;4).

8. Dovetail connection as claimed in claim 6 or 7, **characterized in that** the part in which the pin is movably mounted, preferably the male part, is provided on an outer end in which the non-tapering dovetail profile (4) is situated with an oblique lead track (10; 11) in which the pin (25) is movable during sliding together of said part (1) and the other part (13) of the dovetail connection, preferably the female part.

9. Dovetail connection as claimed in claim 8, **characterized in that** the pin (25) is provided at the outer end with which it falls into the hole (8) during sliding together of the male part (1) and the female part (13) with a chamfered part (27) which can co-act with the oblique lead track (10;11).

10. Dovetail connection as claimed in any of the foregoing claims, **characterized in that** two pins (25) and two holes (8) are present in respectively the female part (13) and the male part (1).

11. Dovetail connection as claimed in claim 10, **characterized in that** the two pins (25) and the two holes (8) are situated on either side of the dovetail profiles.

12. Dovetail connection as claimed in any of the claims 6 to 9 and either of the claims 10 and 11, **characterized in that** the two pins (25) and the two holes (8) are situated in the portion of respectively the male part (1) and the female part (13) in which the non-tapering parts (16;4) of the dovetail profiles are situated.

## Patentansprüche

1. Schwalbenschwanzverbindung zum lösbaren Verbinden zweier Bauelemente (20,6), aufweisend einen Buchsen-Teil (13) und einen Stecker-Teil (1), welche jeweilig an eines der beiden Bauelemente (18,6) montierbar sind und welche beide mit Schwalbenschwanzprofilen (14,15/2,3) versehen sind, die mit einer Verschiebebewegung gegenseitig im Eingriff sein können zu dem Zwecke des Bildens der Schwalbenschwanzverbindung und welche in der Verschieberichtung konisch-zulaufen, wobei die Schwalbenschwanzverbindung mit Verriegelungsmitteln (18,19/8,9) versehen ist zum Verriegeln der Verbindung gegen eine Bewegung in der Verschieberichtung in der Gegenseitig-Im-Eingriff-Position, **dadurch gekennzeichnet, dass** die Verriegelungsmittel (18,19/8,9) von wenigstens einem Zapfen (25) an einem der Schwalbenschwanz-Teile (13) zum Kuppeln und wenigstens einem Loch (8) in dem anderen Schwalbenschwanz-Teil (1) zum Kuppeln ausgebildet sind, wobei dieser Zapfen (25) in einer ausgebildeten Schwalbenschwanzverbindung in einer Richtung senkrecht zur Verschiebeebene und in der Richtung von einem der Löcher (8) bewegbar ist, um in dieses Loch (8) zu fallen zu dem Zwecke des Verriegelns der Schwalbenschwanzverbindung, und in entgegengesetzter Richtung bewegbar ist, um sich aus diesem Loch (8) wieder herauszubewegen zu dem Zwecke des Entriegelns der Schwalbenschwanzverbindung.

2. Schwalbenschwanzverbindung gemäß Anspruch 1, **dadurch gekennzeichnet, dass** der Stecker-Teil einen flachen Block aufweist, der an einer flachen Seite mit einer vorstehenden Leiste in der Form eines Schwalbenschwanzes versehen ist, und der Buchsen-Teil einen flachen Block aufweist, der an einer flachen Seite mit einer Aussparung in der Form eines Schwalbenschwanzes versehen ist.

3. Schwalbenschwanzverbindung wie in Anspruch 1 oder 2 beansprucht, **dadurch gekennzeichnet, dass** der Zapfen und das Loch außerhalb der Schwalbenschwanzprofile des Stecker-Teils und des Buchsen-Teils angeordnet sind.

4. Schwalbenschwanzverbindung wie in Anspruch 1, 2 oder 3 beansprucht, **dadurch gekennzeichnet, dass** der Zapfen (25) in ein Loch (18) in dem Buchsen-Teil (13) der Schwalbenschwanzverbindung bewegbar montiert ist und dass der Zapfen (25) sich in der Gegenseitig-Außereingriff-Position der Verbindung in einer ersten Position befindet, in welcher der Zapfen komplett im Loch (18) in dem Buchsen-Teil (13) liegt, und sich in der Gegenseitig-Im-Eingriff-Position der Verbindung in einer zweiten Position befindet, in welcher der Zapfen (25) passend in das Loch (8) fällt, das in dem Stecker-Teil (1) ausgebildet ist.

5. Schwalbenschwanzverbindung wie in Anspruch 4 beansprucht, **dadurch gekennzeichnet, dass** eine Feder (26) vorhanden ist, die den Zapfen (25) in der Richtung der zweiten Position drückt, und dass der Zapfen (25) gegen die Wirkung der Feder (26) in der ersten Position platzierbar ist.

6. Schwalbenschwanzverbindung wie in irgendeinem der vorhergehenden Ansprüche beansprucht, **dadurch gekennzeichnet, dass** die konisch-zulaufenden Schwalbenschwanzprofile (15;3) an sowohl dem Buchsen-Teil (13) als auch an dem Stecker-Teil (1) an ihrer engeren Seite verlängert sind durch ein nicht-konisch-zulaufendes Schwalbenschwanzprofil.

7. Schwalbenschwanzverbindung wie in Anspruch 6 beansprucht, wobei sich die Zapfen(25)-Loch(8)-Verbindung in dem Abschnitt des Buchsen-Teils (13) und des Stecker-Teils (1) befindet, der mit dem nicht-konisch-zulaufenden Schwalbenschwanzprofil (16; 4) versehen ist.

8. Schwalbenschwanzverbindung wie in Anspruch 6 oder 7 beansprucht, **dadurch gekennzeichnet, dass** der Teil, in welchem der Zapfen bewegbar montiert ist, bevorzugt der Stecker-Teil, an einem äußeren Ende, an welchem sich das nicht-konisch-zulaufende Profil (4) befindet, mit einer schrägen Führungsspur (10; 11) versehen ist, in welcher der Zapfen (25) bewegbar ist während er sich zusammen mit dem besagten Teil (1) oder dem anderen Teil (13) der Schwalbenschwanzverbindung, bevorzugt dem Buchsen-Teil, verschiebebewegt.

9. Schwalbenschwanzverbindung wie in Anspruch 8 beansprucht, **dadurch gekennzeichnet, dass** der Zapfen (25) an dem äußeren Ende, mit welchem er in das Loch (8) fällt während er sich zusammen mit dem Stecker-Teil (1) und dem Buchsen-Teil (13) verschiebebewegt, mit einem abgeschrägten Abschnitt (27) versehen ist, der mit der schrägen Führungsspur (10; 11) zusammenwirken kann.

10. Schwalbenschwanzverbindung wie in irgendeinem der vorhergehenden Ansprüche beansprucht, **dadurch gekennzeichnet, dass** zwei Zapfen (25) und zwei Löcher (8) in jeweils dem Buchsen-Teil (13) und dem Stecker-Teil (1) vorliegen.

11. Schwalbenschwanzverbindung wie in Anspruch 10 beansprucht, **dadurch gekennzeichnet, dass** sich die beiden Zapfen (25) und die beiden Löcher (8) auf jeder Seite der Schwalbenschwanzprofile befinden.

12. Schwalbenschwanzverbindung wie in irgendeinem der Ansprüche 6 bis 9 und jedem der Ansprüche 10 und 11 beansprucht, **dadurch gekennzeichnet, dass** sich die beiden Zapfen (25) und die beiden Löcher (8) in dem Abschnitt von jeweils dem Stecker-Teil (1) und dem Buchsen-Teil (13) befinden, in welchem sich die nicht-konisch-zulaufenden Teile (16;4) der Schwalbenschwanzprofile befinden.

## Revendications

1. Assemblage en queue d'aronde pour assembler de manière détachable deux éléments de construction (20, 6), comportant une partie femelle (13) et une partie mâle (1) qui peuvent chacun être montés sur l'un des éléments de construction (18, 6) et qui sont tous deux dotés de profilés en queue d'aronde (14, 15 / 2, 3) qui peuvent s'enclencher mutuellement avec un mouvement coulissant aux fins de former l'assemblage en queue d'aronde et qui se rétrécissent dans la direction de coulissement, lequel assemblage en queue d'aronde est doté de moyens de verrouillage (18, 19/8, 9) pour verrouiller l'assemblage contre un mouvement dans la direction de coulissement dans la position d'enclenchement mutuel, **caractérisé en ce que** les moyens de verrouillage (18, 19 / 8, 9) sont formés par au moins une goupille (25) au niveau d'une des parties en queue d'aronde (13) pour couplage et au moins un trou (8) dans l'autre partie en queue d'aronde (1) pour couplage, cette goupille (25) étant mobile dans un assemblage en queue d'aronde formé dans une direction perpendiculaire au plan de coulissement et dans la direction de l'un des trous (8) de façon à tomber dans ce trou (8) aux fins de verrouiller l'assemblage en queue d'aronde, et étant mobile dans une direction opposée de manière à sortir de ce trou (8) à nouveau aux fins de déverrouiller l'assemblage en queue d'aronde.

2. Assemblage en queue d'aronde selon la revendication 1, **caractérisé en ce que** la partie mâle comprend un bloc plat doté sur un côté plat d'une arête en saillie sous la forme d'une queue d'aronde et la partie femelle comprend un bloc plat doté sur un côté plat d'un évidement en forme de queue d'aronde.

3. Assemblage en queue d'aronde selon la revendication 1 ou 2, **caractérisé en ce que** la goupille et le trou sont situés en dehors des profilés en queue d'aronde de la partie mâle et de la partie femelle.

4. Assemblage en queue d'aronde selon la revendication 1, 2 ou 3, **caractérisé en ce que** la goupille (25) est montée de manière mobile dans un trou (18) dans la partie femelle (13) de l'assemblage en queue d'aronde et **en ce que** dans la position mutuellement désenclenchée de l'assemblage, la goupille (25) se trouve dans une première position, dans laquelle la goupille repose complètement dans le trou (18) dans la partie femelle (13), et dans la position mutuellement enclenchée de l'assemblage, se trouve dans une seconde position dans laquelle la goupille (25) tombe de sorte à s'emboîter dans le trou (8) formé dans la partie mâle (1).

5. Assemblage en queue d'aronde selon la revendication 4, **caractérisé en ce qu'**un ressort (26) est présent, lequel ressort presse la goupille (25) dans la direction de la seconde position et **en ce que** la goupille (25) peut être placée dans la première position contre l'action du ressort (26).

6. Assemblage en queue d'aronde selon l'une quelconque des revendications précédentes, **caractérisé en ce que** les profilés en queue d'aronde rétrécis (15 ; 3) à la fois sur la partie femelle (13) et la partie mâle (1) sont allongés sur leur côté plus étroit avec un profilé en queue d'aronde non rétréci (16 ; 4).

7. Assemblage en queue d'aronde selon la revendication 6, dans lequel l'assemblage goupille (25)-trou (8) se trouve sur la portion de la partie femelle (13) et de la partie mâle (1) dotée du profilé en queue d'aronde non rétréci (16 ; 4).

8. Assemblage en queue d'aronde selon la revendication 6 ou 7, **caractérisé en ce que** la partie dans laquelle la goupille est montée de manière mobile, de préférence la partie mâle, est pourvue sur une extrémité externe sur laquelle se trouve le profilé en queue d'aronde non rétréci (4) d'une piste principale oblique (10 ; 11) dans laquelle la goupille (25) est mobile lors d'un coulissement conjoint de ladite partie (1) et de l'autre partie (13) de l'assemblage en queue d'aronde, de préférence, de la partie femelle.

9. Assemblage en queue d'aronde selon la revendication 8, **caractérisé en ce que** la goupille (25) est dotée au niveau de l'extrémité externe avec laquelle elle tombe dans le trou (8) lors du coulissement conjoint de la partie mâle (1) et de la partie femelle (13) d'une partie chanfreinée (27) qui co-agit avec la piste principale oblique (10 ; 11).

10. Assemblage en queue d'aronde selon l'une quelconque des revendications précédentes, **caractérisé en ce que** deux goupilles (25) et deux trous (8) sont présents respectivement dans la partie femelle (13) et la partie mâle (1).

11. Assemblage en queue d'aronde selon la revendication 10, **caractérisé en ce que** deux goupilles (25) et deux trous (8) sont présents sur l'un ou l'autre côté des profilés en queue d'aronde.

12. Assemblage en queue d'aronde selon l'une quelconque des revendications 6 à 9 et l'une ou l'autre des revendications 10 et 11, **caractérisé en ce que** les deux goupilles (25) et les deux trous (8) se trouvent dans la portion de la partie mâle (1) et de la partie femelle (13) respectivement, dans laquelle se trouvent les parties non rétrécies (16 ; 4) des profilés en queue d'aronde.
